# EUROPÄISCHE PATENTSCHRIFT

(11) **EP 1 272 409 B1**
(45) Veröffentlichungstag und Bekanntmachung des Hinweises auf die Patenterteilung: **16.06.2004**
(21) Anmeldenummer: 01916971.3
(22) Anmeldetag: 01.02.2001
(51) Int. Cl.: B65G 47/90

(54) **HANDHABUNGSGERÄT ZUM UMPOSITIONIEREN VON TEILEN**
HANDLING GEAR FOR REPOSITIONING PIECES
APPAREIL DE MANIPULATION SERVANT A TRANSFERER DES PIECES

(30) Priorität: 15.03.2000 DE 20004746 U
(43) Veröffentlichungstag der Anmeldung: 08.01.2003
(73) Patentinhaber: Festo Ag & Co., 73734 Esslingen (DE)
(72) Erfinder: FEYRER, Thomas, 73732 Esslingen (DE); THORWART, Gerhard, 70794 Filderstadt (DE); EISELE, Heini, Wilhelm, 71394 Kernen-Stetten (DE)
(74) Vertreter: Abel, Martin, Dipl.-Ing.
(86) Internationale Anmeldenummer: PCT/EP2001/001069
(87) Internationale Veröffentlichungsnummer: WO 2001/068490

(56) Entgegenhaltungen:
- DE-U- 20 004 746
- US-A- 4 289 040
- US-A- 4 740 134

## Beschreibung

Die Erfindung betrifft ein Handhabungsgerät zum Umpositionieren von Teilen, mit mindestens einem durch eine Antriebseinrichtung zu einer oszillierenden Schwenkbewegung um eine Schwenkachse antreibbaren Schwenkarm, der bei der Schwenkbewegung derart auf einen zum Tragen eines Greifers dienenden Greiferträger einwirkt, dass dieser ohne Änderung seiner räumlichen Orientierung entlang einer vorgegebenen Handhabungsbahn verlagert wird, wobei der Greiferträger mit einem Kurvenfolger in Verbindung steht, der mit einer sich ein Stück weit entlang des Umfanges der Schwenkachse erstreckenden und den gewünschten Verlauf der Handhabungsbahn definierenden Bahnvorgabekurve in Eingriff steht, wobei der Greiferträger zur Realisierung einer zumindest partiell von einer Kreisbahn abweichenden Handhabungsbahn relativ zur Schwenkachse in bezüglich dieser radialer Richtung bewegbar gelagert ist, so dass er eine der Umlaufbewegung um die Schwenkachse überlagerte Radialbewegung ausführen kann, und wobei der Greiferträger zur Fixierung seiner räumlichen Orientierung von einer zusätzlich zum Schwenkarm vorgesehenen Führungseinrichtung abgestützt und geführt ist.

In der US 4,740,134 ist ein derartiges Handhabungsgerät beschrieben, das über eine U-förmige Bahnvorgabekurve verfügt, in der ein Kurvenfolger entlang läuft. Der Kurvenfolger greift in einen Schlitz eines oszillierend bewegbaren Hebels ein. An dem Kurvenfolger ist über eine Parallelogrammanordnung ein Greiferträger angeordnet, wobei die Parallelogrammanordnung die sichere Führung des Greiferträgers bei der Umsetzbewegung gewährleistet.

Ein Handhabungsgerät geht beispielsweise aus der DE 296 18 418 U1 hervor. Es wird zum Umpositionieren von Teilen verwendet, die an einer ersten Position aufgenommen und zu einer zweiten Position verlagert werden, wo sie abgesetzt werden. Man spricht daher auch von "Pick-And-Place"-Geräten. Das jeweils umzupositionierende Teil wird während des Umpositioniervorganges von einem geeigneten Greifer gehalten, der an einem Greiferträger des Handhabungsgerätes sitzt und zusammen mit diesem eine von einer Antriebseinrichtung hervorgerufene Handhabungsbahn durchläuft, wobei sich lediglich seine Lage, nicht jedoch seine Orientierung im Raum verändert.

Bei dem Handhabungsgerät der DE 296 18 418 U1 ist der Greiferträger Bestandteil eines zwei Schwenkarme enthaltenden Parallelogrammsystems, wobei die von ihm durchlaufene Handhabungsbahn eine reine Kreisbahn ist. Mit diesem zwar zuverlässigen arbeitenden Konzept lassen sich zwar vielfältige Handhabungsaufgaben bewältigen. Man stößt jedoch an Grenzen, wenn Bedarf nach einer unkreisförmigen Handhabungsbahn besteht, beispielsweise einer im wesentlichen U-förmigen Handhabungsbahn mit zueinander parallelen linearen Bahnendabschnitten, die es ermöglicht, Bauteile zu Beginn und am Ende des Umpositioniervorganges ein Stück weit linear zu bewegen, beispielsweise um Schrauben oder kurze Wellenstücke aus zugeordneten Halterungen zu entnehmen und in vorgesehene Ausnehmungen einzusetzen.

Die gleiche Problematik besteht bei dem in der DE 91 05 666 U1 beschriebenen Handhabungsgerät, das dort als Bestandteil eines Stempelgerätes ausgeführt ist.

Zwar werden in der DE 296 18 418 U1 bereits Ausführungsformen beschrieben, bei denen sich der Greifer entlang einer unkreisförmigen Handhabungsbahn verlagern lässt. Allerdings ist dies zwingend verbunden mit einer Änderung der räumlichen Orientierung des Greifers bzw. Greiferträgers, was den Einsatzbereich wiederum stark einschränkt.

In der DE 36 03 650 C2 wurde bereits ein als Übergabevorrichtung bezeichnetes Handhabungsgerät vorgeschlagen, mit dem sich ein Greifer entlang einer unkreisförmigen Handhabungsbahn mit zueinander parallelen Bahnendabschnitten unter ständiger Beibehaltung seiner räumlichen Orientierung verlagern lässt. Das dabei zur Anwendung gelangende Antriebskonzept ist allerdings relativ aufwendig und erfordert ein großes Bauvolumen, indem zwingend zwei fluidbetätigte Arbeitszylinder benötigt werden, um den gewünschten Bahnverlauf zu realisieren.

Es ist die Aufgabe der vorliegenden Erfindung, ein Handhabungsgerät der eingangs genannten Art zu schaffen, das bei kompakten Abmessungen und geringem antriebstechnischem Aufwand bei zugleich kostengünstigem Aufbau eine zuverlässige Umpositionierung von Teilen auch entlang einer unkreisförmigen Handhabungsbahn ermöglicht.

Zur Lösung dieser Aufgabe ist vorgesehen, dass der Greiferträger über eine lineare Führungsschiene an einem Führungsschlitten in einer ersten Bewegungsrichtung linear verschiebbar geführt ist, wobei der Führungsschlitten seinerseits an einer bezüglich der Schwenkachse ortsfesten Linearführung in einer zur ersten Bewegungsrichtung rechtwinkeligen zweiten Bewegungsrichtung verstellbar geführt ist.

Es kann der durch die Schwenkbewegung der Schwenkachse hervorgerufenen Umlaufbewegung des Greiferträgers durch das Zusammenwirken des Kurvenfolgers und der Bahnvorgabekurve eine Radialbewegung überlagert werden, die den Greiferträger zum Durchlaufen einer gewünschten unkreisförmigen Handhabungsbahn zwingt, wobei die räumliche Orientierung erhalten bleibt. Es kann also der Radius der Umlaufbewegung in Abhängigkeit vom Schwenkwinkel des Schwenkarmes nach Bedarf geändert werden, wobei sich durch entsprechende Ausgestaltung der Bahnvorgabekurve insbesondere auch eine Handhabungsbahn vorgeben lässt, die einen im wesentlichen U-förmigen Verlauf mit zwei zueinander parallelen linearen Bahnendabschnitten aufweist. Dadurch kann das einem Umpositioniervorgang ausgesetzte Teil im Rahmen zumindest einer kurzen Linearbewegung aufgenommen und/oder abgesetzt werden, was Einsatzbereiche für das Handhabungsgerät eröffnet, bei denen beispielsweise Schrauben, kurze Wellen oder sonstige längliche Bauteile im Rahmen einer Linearbewegung in eine Bohrung oder eine sonstige längliche Vertiefung eingesetzt werden müssen.

Zwar ließe sich das Handhabungsgerät prinzipiell auch unter Verwendung mehrerer und insbesondere zweier in ein Gelenkparallelogramm eingegliederter Schwenkarme realisieren. In der Regel ist jedoch eine Ausführungsform mit nur einem einzigen Schwenkarm kostengünstiger und erfordert einen geringeren herstellungstechnischen Aufwand. Insbesondere wenn nur ein einziger Schwenkarm vorhanden ist, empfiehlt sich eine zusätzliche Abstützung und Führung des Greiferträgers an einer zusätzlich zum Schwenkarm vorgesehenen Führungseinrichtung, die auch in der Lage ist, die gewünschte räumliche Orientierung des Greiferträgers aufrechtzuerhalten.

Eine sehr präzise Führung des Greiferträgers ergibt sich, wenn dieser zum einen am Schwenkarm angreift und zum anderen über den Kurvenfolger mit der Bahnvorgabekurve in Eingriff steht, wobei er mit einer linearen Führungsschiene versehen ist, die an einem Führungsschlitten in einer ersten Bewegungsrichtung linear verschiebbar geführt ist, der seinerseits an einer Linearführung in einer zur ersten Bewegungsrichtung rechtwinkeligen zweiten Bewegungsrichtung verstellbar geführt ist, wobei die von den beiden Bewegungsrichtungen aufgespannte Bewegungsebene rechtwinkelig zur Schwenkachse des Schwenkarmes verläuft.

Weitere vorteilhafte Ausgestaltungen der Erfindung gehen aus den Unteransprüchen hervor.

Die kinematische Auslegung der durch den Schwenkarm und den Kurveneingriff realisierten Kinematik wird zweckmäßigerweise so getroffen, dass der Richtungsverlauf der Bahnvorgabekurve demjenigen der Handhabungsbahn entspricht, so dass sich eine direkte Abhängigkeit ergibt, die die Herstellung der Bahnvorgabekurve beträchtlich vereinfacht.

Verfügt das Handhabungsgerät über eine Bahnvorgabekurve mit im wesentlichen U-förmigen Verlauf und dabei zwei zueinander parallelen linearen Kurvenendabschnitten, ist es von Vorteil, wenn die Schwenkachse mindestens eines oder des einzigen Schwenkarmes mittig zwischen den linearen Kurvenendabschnitten platziert ist. Auf diese Weise ergeben sich besonders kompakte Abmessungen.

Zweckmäßigerweise ist der Greiferträger bezüglich der Schwenkachse radial verstellbar an mindestens einem Schwenkarm gelagert und steht dabei gleichzeitig in Mitnahmeeingriff mit dem Schwenkarm. Dabei kann der Greiferträger mit einem vorzugsweise rollenartig ausgebildeten Mitnehmer in ein bezüglich der Schwenkachse radial ausgerichtetes Langloch eingreifen, um den Mitnahmeeingriff zu realisieren. Der vorzugsweise ebenfalls rollenartig ausgeführte Kurvenfolger kann hierbei in zum Mitnehmer koaxialer Anordnung platziert sein, was wiederum besonders kompakte Abmessungen ermöglicht.

Die zusätzliche Führungseinrichtung kann so ausgebildet sein, dass sie dem Greiferträger ausschließlich zwei zueinander rechtwinkelige Bewegungsfreiheitsgrade ermöglicht, um so in einer Ebene die gewünschte Handhabungsbahn durchlaufen zu können.

Um das Handhabungsgerät variabel einsetzen zu können, ist es zweckmäßigerweise mit Anschlagmitteln ausgestattet, die eine variable Vorgabe der Länge der vom Greiferträger zu durchlaufenden Handhabungsbahn ermöglichen und die zweckmäßigerweise so angeordnet sind, dass sie mit dem Greiferträger zusammenarbeiten. Ferner können Stoßdämpfmittel vorgesehen sein, die den Enden der vom Greiferträger zu durchlaufenden Handhabungsbahn zugeordnet sind, um ein gedämpftes Abbremsen des Greiferträgers beim Erreichen der jeweiligen Endposition zu ermöglichen.

Eine weitere vorteilhafte Ausgestaltung sieht vor, dass die Bahnvorgabekurve Bestandteil mehrerer beispielsweise plattenartig aufgebauter Kurventräger ist, die zumindest teilweise relativ zueinander verstellbar sind, um den Verlauf der Bahnvorgabekurve zu beeinflussen. Auf diese Weise lässt sich beispielsweise die Länge mindestens eines Kurvenabschnittes variieren, beispielsweise zur Anpassung an die Länge der Wegstrecke, die zwischen der Anfangs- und Endposition eines umzupositionierenden Teiles liegt.

Als Antriebseinrichtung für die Erzeugung der Schwenkbewegung des mindestens einen Schwenkarmes kommt zweckmäßigerweise ein fluidbetätigter Drehantrieb zum Einsatz, der als unmittelbarer Bestandteil des Handhabungsgerätes ausgeführt ist.

Am Greiferträger sind zweckmäßigerweise Befestigungsmittel vorgesehen, die eine lösbare Fixierung eines Greifers ermöglichen, so dass sich bei Bedarf unter Belassung des Greiferträgers ein einfacher Greiferaustausch vornehmen lässt.

Nachfolgend wird die Erfindung anhand der beiliegenden Zeichnung näher erläutert. In dieser zeigen:

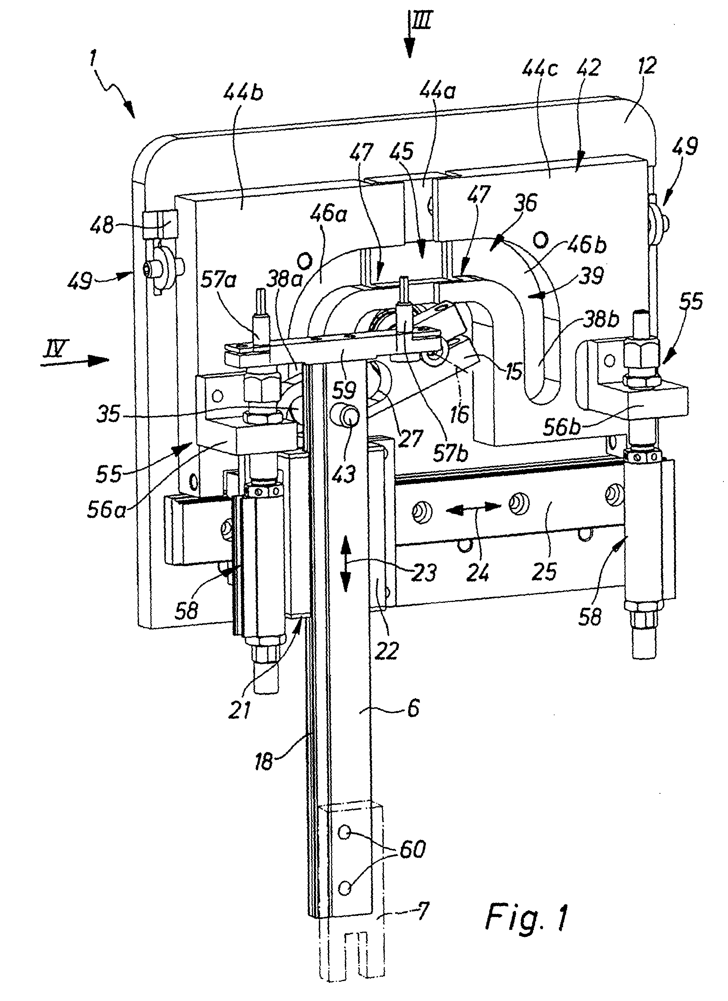

- Figur 1: eine perspektivische Vorderansicht einer bevorzugten Ausführungsform des erfindungsgemäßen Handhabungsgerätes,

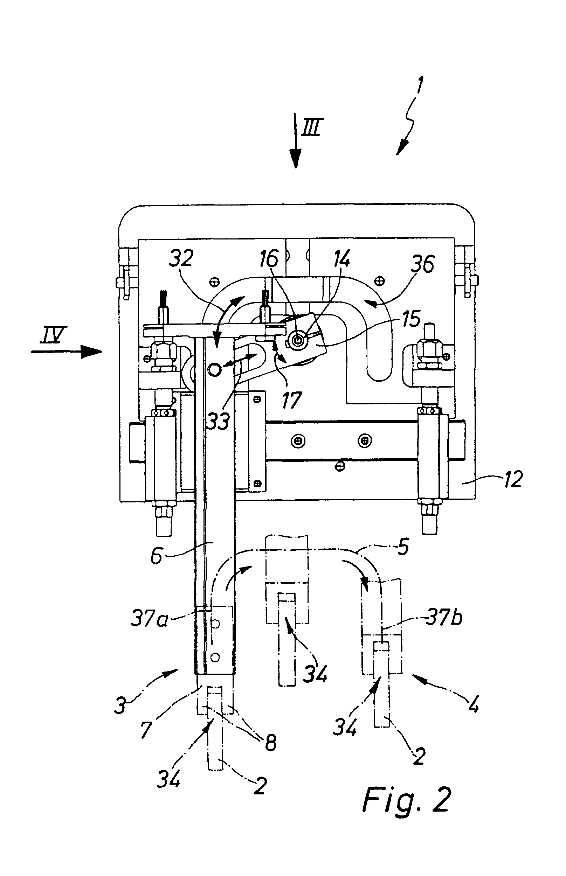

- Figur 2: das Handhabungsgerät aus Figur 1 in einer Vorderansicht,

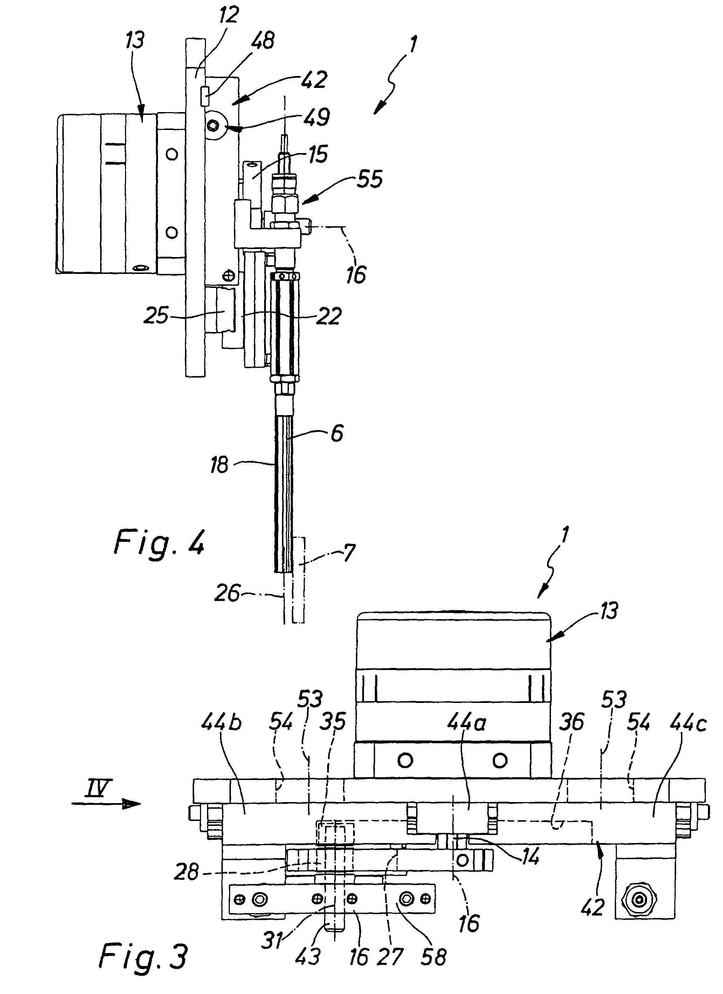

- Figur 3: das Handhabungsgerät aus Figuren 1 und 2 in einer Draufsicht mit Blickrichtung gemäß Pfeil III, und
- Figur 4: eine Seitenansicht des Handhabungsgerätes mit Blickrichtung gemäß Pfeil IV.

Das in der Zeichnung allgemein mit Bezugsziffer 1 bezeichnete Handhabungsgerät ermöglicht ein aufeinanderfolgendes Umpositionieren von Teilen beliebiger Art, insbesondere von Kleinteilen wie Schrauben, Bolzen oder sonstigen Teilen mit überwiegender Längserstreckung. In der Zeichnung ist ein solches umzupositionierendes Teil bei 2 strichpunktiert angedeutet.

Das Handhabungsgerät 1 ist so ausgelegt, dass das Teil 2 während eines Umpositioniervorganges zwischen zwei beabstandeten Endpositionen 3, 4 verlagerbar ist, wobei die dabei von ihm durchlaufene Bahnkurve dem Verlauf einer ebenfalls nur strichpunktiert angedeuteten Handhabungsbahn 5 entspricht, die ein angetriebener Greiferträger 6 durchläuft, der mit einem zum lösbaren Halten des umzupositionierenden Teils dienenden Greifer 7 geeigneter Bauart ausgestattet ist.

Bei dem Greifer 7 kann es sich beispielsweise um einen zangenartigen Greifer handeln, der über verschwenkbare Greifbacken 8 verfügt, die sich elektrisch oder bevorzugt durch Fluidkraft betätigen lassen, um ein Teil 2 nach Bedarf festzuhalten oder loszulassen. Weitere mögliche Ausführungsformen für den Greifer 7 wären beispielsweise Sauggreifer oder Magnetgreifer, die das handzuhabende Teil durch Unterdruck oder durch Magnetkraft halten können.

Das Handhabungsgerät 1 enthält als Basis einen bevorzugt plattenförmigen Tragkörper 12, an den rückseitig eine insbesondere von einem einzigen fluidbetätigten Drehantrieb gebildete Antriebseinrichtung 13 angesetzt ist. Eine Antriebswelle 14 der Antriebseinrichtung 13 durchsetzt den Tragkörper 12 und trägt im Bereich der Vorderseite des Tragkörpers 12 einen radial wegragenden Schwenkarm 15.

Anstelle eines fluidbetätigten Drehantriebes könnte auch ein elektrisch betätigter Drehantrieb eingesetzt werden.

Durch Aktivierung der Antriebseinrichtung 13 lässt sich die Antriebswelle 14 zu einer hin- und hergehenden Drehbewegung um ihre Längsachse antreiben, wobei diese Längsachse gleichzeitig die Schwenkachse 16 bildet, bezüglich der der drehfest mit der Antriebswelle 14 verbundene Schwenkarm 15 somit zu einer oszillierenden Schwenkbewegung 17 um die Schwenkachse 16 antreibbar ist.

Der Greiferträger 6 ist beim Ausführungsbeispiel von einem länglichen, stab- oder leistenförmigen Bauteil gebildet und mit einer sich in seiner Längsrichtung erstreckenden linearen Führungsschiene 18 ausgestattet. Letztere kann als separates Teil oder als einstückiger Bestandteil des Greiferträgers 6 ausgeführt sein. Die Führungsschiene 18 erstreckt sich in einer zur Schwenkachse 16 rechtwinkeligen Ebene.

Über die Führungsschiene 18 ist der Greiferträger 6 an einem Führungsschlitten 22 in einer durch Doppelpfeil angedeuteten ersten Bewegungsrichtung 23 linear verschiebbar geführt. Der Führungsschlitten 22 seinerseits ist an einer Linearführung 25 in einer zur ersten Bewegungsrichtung 23 rechtwinkeligen zweiten Bewegungsrichtung 24 verstellbar geführt. Die Linearführung 25 ist beim Ausführungsbeispiel von einer Führungsschiene gebildet, die an der Vorderseite des Tragkörpers 12 befestigt ist und die vom Führungsschlitten 22 reiterartig übergriffen wird.

Durch Überlagerung der zueinander rechtwinkeligen Bewegungsrichtungen 23, 24 kann somit der Greiferträger 6 in einer zur Schwenkachse 16 rechtwinkeligen und zur besseren Unterscheidung als Bewegungsebene 26 bezeichneten Ebene beliebig positioniert werden.

Der Greiferträger 6 steht mit dem beim Ausführungsbeispiel einzigen Schwenkarm 15 in Mitnahmeeingriff, so dass er bei der Schwenkbewegung des Schwenkarmes 15 in einer vorbestimmten Weise mitbewegt wird. Der Mitnahmeeingriff ist so ausgelegt, dass der Greiferträger 6 bezüglich der Schwenkachse 16 radial verstellbar am Schwenkarm gelagert ist. Beim Ausführungsbeispiel ist dies dadurch realisiert, dass am Schwenkarm 15 ein sich in dessen Längsrichtung erstreckendes, bezüglich der Schwenkachse 16 radial verlaufendes Langloch 27 vorgesehen ist, in das ein am Greiferträger 6 angeordneter Mitnehmer 28 eingreift. Der Mitnehmer 28 ist beim Ausführungsbeispiel ein am Greiferträger 6 drehbar gelagerter Rollenkörper, wobei die Drehachse 31 zur Schwenkachse 16 parallel verläuft.

Führt der Schwenkarm 15 eine Schwenkbewegung aus, so wirkt die momentan in Schwenkrichtung orientierte Flanke des Langloches 27 auf den Mitnehmer 28 ein und nimmt den Greiferträger 6 mit, so dass dieser eine durch Doppelpfeil angedeutete Umlaufbewegung 32 bezüglich der Schwenkachse 16 ausführt.

Bedingt durch den Langlocheingriff mit dem Schwenkarm 15, und ferner bedingt durch die dem Greiferträger zwei zueinander rechtwinkelige Bewegungsfreiheitsgrade verleihende Führungseinrichtung 21 - diese enthält die Führungsschiene 18, den Führungsschlitten 22 und die Linearführung 25 -, kann der Greiferträger 6 dabei gleichzeitig eine überlagerte, durch einen Doppelpfeil angedeutete Radialbewegung 33 bezüglich der Schwenkachse 16 ausführen.

Durch die Führungseinrichtung 21 ist dabei stets gewährleistet, dass der Greiferträger 6 so abgestützt und geführt ist, dass er seine räumliche Orientierung unabhängig von der momentanen Position beibehält. Er ändert zwar seine Lage im Raum, allerdings nur im Rahmen einer Verlagerung und ohne Änderung seiner winkelmäßigen Ausrichtung. Dies hat zur Folge, dass der am handzuhabenden Teil 2 angreifende Greifabschnitt 34 des Greifers 7 stets in die gleiche Richtung weist, beim Ausführungsbeispiel vertikal nach unten.

Der Verlauf der oben erwähnten Handhabungsbahn 5 ist dadurch vorgegeben , dass am Greiferträger 6 ein Kurvenfolger 35 angeordnet ist, der mit einer sich ein Stück weit entlang des Umfanges der Schwenkachse 16 erstreckenden Bahnvorgabekurve 36 in Führungseingriff steht. Während der Greiferträger 6 also seine Umlaufbewegung 32 ausführt, läuft sein Kurvenfolger 35 unter Zwangsführung der Bahnvorgabekurve 36 entlang, durch deren Verlauf sich schwenkwinkelabhängig die momentane Radialposition und somit die Radialbewegung 33 des Greiferträgers 6 vorgeben lässt. Somit lässt sich durch entsprechend vorgegebenen Verlauf der Bahnvorgabekurve 36 der für die Handhabungsbahn 5 gewünschte Verlauf erhalten.

Beim Ausführungsbeispiel ist der Verlauf der Bahnvorgabekurve 36 so gewählt, dass die vom Greiferträger 6 und somit auch vom Greifer 7 im Betrieb durchlaufene Handhabungsbahn 5 einen im wesentlichen U-förmigen Verlauf mit zwei zueinander parallelen linearen Bahnendabschnitten 37a, 37b aufweist. Aufgrund der beim Ausführungsbeispiel getroffenen und oben erläuterten kinematischen Auslegung entsprechen sich vorliegend die Verläufe der Bahnvorgabekurve 36 und der Handhabungsbahn 5. Dies erleichtert die Herstellung, weil durch den Verlauf der Bahnvorgabekurve 36 der Verlauf der Handhabungsbahn 5 1:1 vorgeben werden kann.

Mithin hat beim Ausführungsbeispiel auch die Bahnvorgabekurve 36 einen im wesentlichen U-förmigen Verlauf mit zwei zueinander parallelen linearen Kurvenendabschnitten 38a, 38b, wobei zweckmäßigerweise die Enden der Kurvenendabschnitte 38a, 38b in die gleiche Richtung weisen wie der Greifabschnitt 34, vorliegend als vertikal nach unten. Die Bahnvorgabekurve 36 und folglich auch die Handhabungsbahn 5 hat somit einen U-ähnlichen Verlauf mit nach unten weisender U-Öffnung.

Die Schwenkachse 16 des bevorzugt einzigen Schwenkarmes 15 befindet sich beim Ausführungsbeispiel vorzugsweise mittig zwischen den beiden Kurvenendabschnitten 38a, 38b der Bahnvorgabekurve 36. Dies ermöglicht besonders kompakte Abmessungen des Handhabungsgerätes sowohl in Breiten- als auch in Höhenrichtung.

Der Greiferträger 6 greift also zum einen am Schwenkarm 15 an und steht zum anderen über den Kurvenfolger 35 mit der Bahnvorgabekurve 36 in Führungseingriff. Die Bahnvorgabekurve 36 ist beim Ausführungsbeispiel von den Flanken eines dem gewünschten Kurvenverlauf folgenden Längsschlitzes 39 definiert, der an einer Kurventrägereinrichtung 42 ausgebildet ist, die beim Ausführungsbeispiel an der Vorderseite des Tragkörpers 12 angebracht ist. Der Kurvenfolger 35 ragt von vorne her in den Längsschlitz 39 hinein, der rückseitig durch den Tragkörper 12 oder durch eine entsprechende Wand der Kurventrägereinrichtung 42 geschlossen sein kann, so dass sich ein nutartiger Aufbau ergibt.

Der Kurvenfolger 35 ist beim Ausführungsbeispiel von einem wie der Mitnehmer 28 wälzgelagerten Rollenkörper gebildet, der mit geringfügigem Spiel in den Längsschlitz 39 eingreift, so dass er an dessen Schlitzflanken abrollen kann.

Der Kurvenfolger 35 ist zweckmäßigerweise koaxial zum Mitnehmer 28 angeordnet, so dass sich übereinstimmende Drehachsen 31 ergeben. Beide Komponenten können gemeinsam auf einer am Greiferträger 6 fixierten Lagerungsachse 43 gelagert sein. Dabei ist zweckmäßigerweise vorgesehen, dass der als länglicher Körper ausgebildete Greiferträger 6 über den Schwenkarm 15 hinweggreift, der somit zwischen dem Greiferträger 6 und dem Tragkörper 12 liegt, wobei die Lagerungsachse 43 das Langloch 27 durchgreift und im Bereich des Langloches 27 den Mitnehmer 28 und unterhalb diesem den Kurvenfolger 35 trägt.

Die Kurventrägereinrichtung 42 besteht beim Ausführungsbeispiel aus mehreren plattenähnlich gestalteten Kurventrägern 44, die in einer zur Bewegungsebene 26 parallelen Ebene an der Vorderseite des Tragkörpers 12 angebracht sind. Diese Kurventräger 44 sind in dieser Ebene zumindest teilweise relativ zueinander verstellbar, um den Verlauf der Bahnvorgabekurve 36 beeinflussen zu können. Beim Ausführungsbeispiel besteht dabei die vorteilhafte Möglichkeit, die Länge eines bestimmten Kurvenabschnittes, nachfolgend als längenvariabler Kurvenabschnitt 45 bezeichnet, zu variieren.

Unter Zugrundelegung des U-ähnlichen Verlaufes der Bahnvorgabekurve 36 entspricht der längenvariable Kurvenabschnitt 45 dem sich quer zwischen den U-Schenkeln erstreckenden Verbindungsabschnitt, der beim Ausführungsbeispiel einen linearen Verlauf hat. Die U-förmige Gestalt setzt sich somit aus den beiden zueinander parallelen linearen Kurvenendabschnitten 38a, 38b, dem dazwischenliegenden längenvariablen linearen Kurvenabschnitt 45 und jeweils einem bogenförmigen Übergangsabschnitt 46a, 46b zwischen dem längenvariablen Kurvenabschnitt 45 und einem jeweiligen Kurvenendabschnitt 38a, 38b zusammen.

Die Kurventräger 44 sind so ausgebildet, dass die die Bahnvorgabekurve 36 definierenden Flanken des Längsschlitzes 39 sich in Kurvenlängsrichtung überlappen, wobei der Überlappungsgrad von der momentan getroffenen Einstellung abhängt.

Beim konkreten Ausführungsbeispiel ist ein zentraler Kurventräger 44a vorgesehen, der unbeweglich am Tragkörper 12 befestigt ist und der zumindest eine Teillänge des längenvariablen Kurvenabschnittes 45 definiert. Auf entgegengesetzten Seiten ist dieser zentrale Kurventräger 44a von jeweils einem äußeren Kurventräger 44b, 44c flankiert, an denen die übrigen Kurvenabschnitte vorgesehen sind und die in Längsrichtung des längenvariablen Kurvenabschnittes 45 relativ zum Tragkörper 12 verstellbar und in der eingestellten Position festlegbar sind. Dabei ergibt sich je nach Einstellung eine unterschiedlich weite Überlappung nebeneinanderliegender Schlitzflankenbereiche in durch Pfeile markierten Überlappungsbereichen 47.

Um die gewünschte Einstellung vornehmen zu können, sitzen die beiden beweglichen äußeren Kurventräger 44 auf einer am Tragkörper 12 festgelegten und parallel zum längenvariablen Kurvenabschnitt 45 verlaufenden Führungsschiene 48 und kooperieren jeweils mit einer sich am Tragkörper 12 abstützenden Einstellschraube 49 oder einem anderen Einstellmechanismus, der eine stufenlose Positionseinstellung ermöglicht.

Die jeweils eingestellte Position wird beim Ausführungsbeispiel durch eine oder mehrere Befestigungsschrauben 53 fixiert, die den Tragkörper 12 von der Rückseite her durchgreifen und in den betreffenden äußeren Kurventräger 44b, 44c eingeschraubt sind. Der Durchgriffsbereich der Befestigungsschrauben 53 im Tragkörper 12 ist jeweils als Langloch 54 ausgebildet, so dass die Befestigungsschrauben 53 nach dem Lösen zusammen mit dem beweglichen Kurventräger 44b, 44c verlagert werden können, um sie an der neuen Position wieder festzuziehen.

Die zweckmäßigerweise ebenfalls am Tragkörper 12 gelagerte Linearführung 25 befindet sich beim Ausführungsbeispiel in einem den Enden der beiden Kurvenendabschnitte 38a, 38b vorgelagerten Bereich und erstreckt sich quer zu diesen Kurvenendabschntten 38a, 38b parallel zum längenvariablen Kurvenabschnitt 45. Zweckmäßigerweise erstreckt sich die Linearführung 25 in der gleichen Ebene wie die Kurventrägereinrichtung 42.

Das Handhabungsgerät 1 ist vorzugsweise auch mit Anschlagmitteln 55 ausgestattet, die eine variable Vorgabe der Länge der vom Greiferträger 6 zu durchlaufenden Handhabungsbahn 5 ermöglichen. Hierzu ist beim Ausführungsbeispiel jedem Kurvenendabschnitt 38a, 38b eine Anschlageinheit 56a, 56b zugeordnet, die mit dem Greiferträger 6 bei Annäherung an die gewünschte Endposition zusammenarbeiten kann. Der Greiferträger 6 ist hierzu beim Ausführungsbeispiel mit Gegenanschlageinheiten 57a, 57b ausgestattet, die zweckmäßigerweise an einem Querträger 59 des Greiferträgers 6 befestigt sind und die jeweils zur Kooperation mit einer der Anschlageinheiten 56a, 56b vorgesehen sind. Geeignete Einstellmöglichkeiten, beispielsweise Einstellgewinde, ermöglichen eine stufenlos veränderliche Positionsvorgabe.

Das Handhabungsgerät 1 ist desweiteren vorzugsweise mit Stoßdämpfmitteln 58 ausgestattet, die wie die Anschlagmittel 55 den Enden der vom Greiferträger 6 zu durchlaufenden Handhabungsbahn 5 zugeordnet sind und mit dem Greiferträger 6 zusammenarbeiten können, um den Endaufprall bei Erreichen der durch die Anschlagmittel vorgegebenen Endpositionen abzudämpfen. Die Stoßdämpfmittel 58 können einfache Pufferungsmittel sein, sind vorzugsweise aber von hydraulischen Stoßdämpfern gebildet. Beim Ausführungsbeispiel ist jede Anschlageinheit 56a, 56b als Baueinheit mit einem Stoßdämpfer ausgeführt.

Obgleich sich das Handhabungsgerät auch unter gleichzeitiger Verwendung mehrerer und insbesondere zweier Schwenkarme 15 realisieren ließe, wird eine Bauform mit nur einem Schwenkarm 15 in der Regel vorgezogen, weil sich dadurch herstellungstechnische Vorteile ergeben und kompaktere Abmessungen bei kostengünstiger Herstellung realisieren lassen.

Zu dem Greifer 7 ist noch nachzutragen, dass dieser zweckmäßigerweise lösbar am Greiferträger 6 festgelegt ist, so dass bei Bedarf im Hinblick auf den Anwendungsfall ein Austausch vorgenommen werden kann. Geeignete Befestigungsmittel sind bei 60 angedeutet.

## Patentansprüche

1. Handhabungsgerät zum Umpositionieren von Teilen, mit mindestens einem durch eine Antriebseinrichtung (13) zu einer oszillierenden Schwenkbewegung um eine Schwenkachse (16) antreibbaren Schwenkarm (15), der bei der Schwenkbewegung derart auf einen zum Tragen eines Greifers (7) dienenden Greiferträger (6) einwirkt, dass dieser ohne Änderung seiner räumlichen Orientierung entlang einer vorgegebenen Handhabungsbahn (5) verlagert wird, wobei der Greiferträger (6) mit einem Kurvenfolger (35) in Verbindung steht, der mit einer sich ein Stück weit entlang des Umfanges der Schwenkachse (16) erstreckenden und den gewünschten Verlauf der Handhabungsbahn (5) definierenden Bahnvorgabekurve (36) in Eingriff steht, wobei der Greiferträger (6) zur Realisierung einer zumindest partiell von einer Kreisbahn abweichenden Handhabungsbahn (5) relativ zur Schwenkachse (16) in bezüglich dieser radialer Richtung bewegbar gelagert ist, so dass er eine der Umlaufbewegung (32) um die Schwenkachse (16) überlagerte Radialbewegung (33) ausführen kann, und wobei der Greiferträger (6) zur Fixierung seiner räumlichen Orientierung von einer zusätzlich zum Schwenkarm (15) vorgesehenen Führungseinrichtung (21) abgestützt und geführt ist, **dadurch gekennzeichnet, dass** der Greiferträger (6) über eine lineare Führungsschiene (18) an einem Führungsschlitten (22) in einer ersten Bewegungsrichtung (23) linear verschiebbar geführt ist, wobei der Führungsschlitten (22) seinerseits an einer bezüglich der Schwenkachse (16) ortsfesten Linearführung (25) in einer zur ersten Bewegungsrichtung (23) rechtwinkeligen zweiten Bewegungsrichtung (24) verstellbar geführt ist.

2. Handhabungsgerät nach Anspruch 1, **dadurch gekennzeichnet, dass** der Verlauf der Bahnvorgabekurve (36) derart ausgeführt ist, dass die vom Greiferträger (6) im Betrieb durchlaufene Handhabungsbahn (5) einen im wesentlichen U-förmigen Verlauf mit zwei zueinander parallelen linearen Bahnendabschnitten (37a, 37b) aufweist.

3. Handhabungsgerät nach Anspruch 1 oder 2, **dadurch gekennzeichnet, dass** die kinematische Auslegung so getroffen ist, dass der Richtungsverlauf der Bahnvorgabekurve (36) demjenigen der Handhabungsbahn (5) entspricht.

4. Handhabungsgerät nach Anspruch 3 in Verbindung mit Anspruch 2, **dadurch gekennzeichnet, dass** die Bahnvorgabekurve (36) einen im wesentlichen U-förmigen Verlauf mit zwei zueinander parallelen linearen Kurvenendabschnitten (38a, 38b) aufweist, wobei die Schwenkachse (16) mindestens eines Schwenkarmes (15) vorzugsweise mittig zwischen den Kurvenendabschnitten (38a, 38b) platziert ist.

5. Handhabungsgerät nach einem der Ansprüche 1 bis 4, **dadurch gekennzeichnet, dass** der Greiferträger (6) bezüglich der Schwenkachse (16) radial verstellbar an mindestens einem Schwenkarm (15) gelagert ist und zweckmäßigerweise gleichzeitig in Mitnahmeeingriff mit dem Schwenkarm (15) steht.

6. Handhabungsgerät nach Anspruch 5, **dadurch gekennzeichnet, dass** ein mit dem Greiferträger (6) verbundener und vorzugsweise rollenartig ausgebildeter Mitnehmer (28) in ein bezüglich der Schwenkachse (16) radial ausgerichtetes Langloch (27) des Schwenkarmes (15) eingreift, um einen Mitnahmeeingriff hervorzurufen.

7. Handhabungsgerät nach Anspruch 6, **dadurch gekennzeichnet, dass** der vorzugsweise rollenartig ausgeführte Kurvenfolger (35) koaxial zu dem Mitnehmer (28) angeordnet ist.

8. Handhabungsgerät nach einem der Ansprüche 1 bis 7, **dadurch gekennzeichnet, dass** der Greiferträger (6) an lediglich einem einzigen Schwenkarm (15) angreift.

9. Handhabungsgerät nach einem der Ansprüche 1 bis 8, **dadurch gekennzeichnet, dass** die Führungseinrichtung (21) so ausgeführt ist, dass sie dem Greiferträger (6) ausschließlich zwei zueinander rechtwinkelige Bewegungsfreiheitsgrade ermöglicht.

10. Handhabungsgerät nach einem der Ansprüche 1 bis 9, **dadurch gekennzeichnet, dass** die Linearführung (25) im Zusammenhang mit einer einen U-förmigen Verlauf aufweisenden Bahnvorgabekurve (36) in einem den Kurvenendabschnitten (38a, 38b) vorgelagerten Bereich quer zu diesen Kurvenendabschnitten (38a, 38b) verläuft.

11. Handhabungsgerät nach einem der Ansprüche 1 bis 10, **gekennzeichnet durch** zur variablen Vorgabe der Länge der vom Greiferträger (6) zu durchlaufenden Handhabungsbahn (5) dienende Anschlagmittel (55), die zweckmäßigerweise mit dem Greiferträger (6) zusammenarbeiten.

12. Handhabungsgerät nach einem der Ansprüche 1 bis 11, **gekennzeichnet durch** Stoßdämpfmittel (58), die den Enden der vom Greiferträger (6) zu durchlaufenden Handhabungsbahn (5) zugeordnet sind und mit dem Greiferträger (6) zusammenarbeiten können.

13. Handhabungsgerät nach einem der Ansprüche 1 bis 12, **dadurch gekennzeichnet, dass** die Bahnvorgabekurve (36) Bestandteil mehrerer Kurventräger (44) ist, die zur Beeinflussung des Verlaufes der Bahnvorgabekurve (36) zumindest teilweise relativ zueinander verstellbar sind.

14. Handhabungsgerät nach Anspruch 13, **dadurch gekennzeichnet, dass** die Kurventräger (44) auf einem vorzugsweise plattenartigen Tragkörper (12) angeordnet sind, an dem zweckmäßigerweise auch die gegebenenfalls vorhandene Führungseinrichtung (21) für den Greiferträger (6) vorgesehen ist.

15. Handhabungsgerät nach einem der Ansprüche 1 bis 14, **dadurch gekennzeichnet, dass** die Antriebseinrichtung (13) von einem fluidbetätigten oder elektrischen Drehantrieb gebildet ist.

16. Handhabungsgerät nach einem der Ansprüche 1 bis 15, **gekennzeichnet durch** einen lösbar am Greiferträger (6) fixierten Greifer (7).

## Claims

1. Handling device for the repositioning of parts, with at least one swivel arm (15) capable of being driven by a drive unit (13) to perform an oscillating swivelling movement about a swivelling axis (16), which while swivelling so acts on a gripper carrier (6) designed to support a gripper (7) that it is displaced along a preset handling path (5) without any change to its spatial orientation, whereby the gripper carrier (6) is connected to a cam follower (35) in engagement with a path presetting cam (36) extending along part of the circumference of the swivelling axis (16) and defining the desired course of the handling path (5), whereby the gripper carrier (6) is mounted movably relative to the swivelling axis (16) in the radial direction relative thereto to obtain a handling path (5) which at least partially deviates from a circular path, so that it is able to perform a radial movement (33) superimposed on the rotary movement (32) about the swivelling axis (16), and whereby the gripper carrier (6) is supported and guided by a guide device (21) provided in addition to the swivel arm (15) to fix its spatial orientation, **characterised in that** the gripper carrier (6) is guided for linear movement in a first direction of movement (23) on a guide block (22) by way of a linear guide rail (18), whereby the guide block (22) is in turn guided for movement in a second direction of movement (24) at right angles to the first direction of movement (23) along a linear guide (25) fixed relative to the swivelling axis (16).

2. Handling device according to claim 1, **characterised in that** the course of the path presetting cam (36) is so designed that the handling path (5) traversed by the gripper carrier (6) in operation is substantially U-shaped with two parallel linear path end sections (37a, 37b).

3. Handling device according to claim 1 or 2, **characterised in that** the kinematics are so designed that the course of the direction of the path presetting cam (36) corresponds to that of the handling path (5).

4. Handling device according to claim 3 in conjunction with claim 2, **characterised in that** the path presetting cam (36) is substantially U-shaped with two parallel linear cam end sections (38a, 38b), whereby the swivelling axis (16) of at least one swivel arm (15) is preferably placed centrally between the cam end sections (38a, 38b).

5. Handling device according to any of claims 1 to 4, **characterised in that** the gripper carrier (6) is mounted on at least one swivel arm (15) for radial adjustment relative to the swivelling axis (16) and is at the same time expediently in driving engagement with the swivel arm (15).

6. Handling device according to claim 5, **characterised in that** a preferably roller-like driver (28) connected to the gripper carrier (6) engages a slot (27) of the swivel arm (15) which is radially oriented relative to the swivelling axis (16) for driving engagement.

7. Handling device according to claim 6, **characterised in that** the preferably roller-like cam follower (35) is located coaxially with the driver (28).

8. Handling device according to any of claims 1 to 7, **characterised in that** the gripper carrier (6) acts on one swivel arm (15) only.

9. Handling device according to any of claims 1 to 8, **characterised in that** the guide device (21) is so designed that it offers only two degrees of freedom of movement at right angles to one another to the gripper carrier (6).

10. Handling device according to any of claims 1 to 9, **characterised in that** the linear guide (25), in combination with a U-shaped path presetting cam (36), extends in an area in front of the cam end sections (38a, 38b) at right angles to said cam end sections (38a, 38b).

11. Handling device according to any of claims 1 to 10, **characterised in that** stop elements (55) expediently acting together with the gripper carrier (6) are provided for the variable presetting of the length of the handling path (5) to be traversed by the gripper carrier (6).

12. Handling device according to any of claims 1 to 11, **characterised in that** shock absorbing elements (58) are assigned to the ends of the handling path (5) to be traversed by the gripper carrier (6) and are capable of acting together with the gripper carrier (6).

13. Handling device according to any of claims 1 to 12, **characterised in that** the path presetting cam (36) is part of several cams (44) capable of at least partial adjustment relative to one another to influence the course of the path presetting cam (36).

14. Handling device according to claim 13, **characterised in that** the cams (44) are located on a preferably plate-like support body (12), on which the guide device (21) for the gripper carrier (6), if fitted, is expediently provided as well.

15. Handling device according to any of claims 1 to 14, **characterised in that** the drive unit (13) is represented by a hydraulically or electrically operated rotary drive.

16. Handling device according to any of claims 1 to 15, **characterised in that** a gripper (7) is detachably mounted on the gripper carrier (6).

## Revendications

1. Appareil de manipulation pour repositionner des pièces, comportant au moins un bras pivotant (15) pouvant être entraîné par un dispositif d'entraînement (13) en un mouvement de pivotement oscillant autour d'un axe de pivotement (16), lequel bras pivotant agit, lors du mouvement de pivotement, sur un porte-pince (6) servant à supporter une pince (7), pendant le mouvement de pivotement, de manière que celui-ci soit déplacé, sans modification de son orientation spatiale, le long d'une trajectoire de manipulation (5) prédéfinie, le porte-pince (6) étant en liaison avec un suiveur de courbe (35) qui est en prise avec une courbe de sélection de trajectoire (36) s'étendant sur une certaine distance le long de la circonférence de l'axe de pivotement (16) et définissant l'allure souhaitée de la trajectoire de manipulation (5), tandis que pour réaliser une trajectoire de manipulation (5) s'écartant au moins en partie d'une trajectoire circulaire par rapport à l'axe de pivotement (16), le porte-pince (6) est monté déplaçable dans une direction radiale par rapport à celui-ci, de sorte qu'il peut exécuter un mouvement radial (33) superposé au mouvement de rotation (32) autour de l'axe de pivotement (16), et, pour fixer son orientation spatiale, le porte-pince (6) est soutenu et guidé par un dispositif de guidage (21) prévu en supplément au bras pivotant (15), **caractérisé en ce que** le porte-pince (6) est guidé, par un rail de guidage (18) linéaire, sur un chariot de guidage (22) de manière à pouvoir coulisser linéairement dans une première direction de déplacement (23), le chariot de guidage (22) étant guidé réglable de son côté sur un guide linéaire (25) fixe par rapport à l'axe de pivotement (16), dans une deuxième direction de déplacement (24) perpendiculaire à la première direction de déplacement (23).

2. Appareil de manipulation selon la revendication 1, **caractérisé en ce que** l'allure de la courbe de sélection de trajectoire (36) est réalisée de manière que la trajectoire de manipulation (5), suivie pendant le fonctionnement par le porte-pince (6), présente un parcours sensiblement en U avec deux tronçons terminaux de trajectoire (37a, 37b) linéaires, parallèles l'un à l'autre.

3. Appareil de manipulation selon la revendication 1 ou 2, **caractérisé en ce que** la conception cinématique est telle que l'allure de la direction de la courbe de sélection de trajectoire (36) corresponde à celle de la trajectoire de manipulation (5).

4. Appareil de manipulation selon la revendication 3, en combinaison avec la revendication 2, **caractérisé en ce que** la courbe de sélection de trajectoire (36) présente un parcours sensiblement en U avec deux tronçons terminaux de courbe (38a, 38b) linéaires, parallèles l'un à l'autre, l'axe de pivotement (16) d'au moins un bras pivotant (15) étant placé de préférence au milieu entre les tronçons terminaux de courbe (38a, 38b).

5. Appareil de manipulation selon l'une des revendications 1 à 4, **caractérisé en ce que** le porte-pince (6) est monté sur au moins un bras pivotant (15), réglable radialement par rapport à l'axe de pivotement (16), et est en même temps avantageusement en engagement d'entraînement avec le bras pivotant (15).

6. Appareil de manipulation selon la revendication 5, **caractérisé en ce qu'**un entraîneur (28), relié au porte-pince (6) et réalisé de préférence à la manière d'un rouleau, s'engage dans un trou oblong (27), orienté radialement par rapport à l'axe de pivotement (16), du bras pivotant (15), pour provoquer un engagement d'entraînement.

7. Appareil de manipulation selon la revendication 6, **caractérisé en ce que** le suiveur de courbe (35), réalisé de préférence à la manière d'un rouleau, est disposé coaxialement à l'entraîneur (28).

8. Appareil de manipulation selon l'une des revendications 1 à 7, **caractérisé en ce que** le porte-pince (6) agit uniquement sur un seul bras pivotant (15).

9. Appareil de manipulation selon l'une des revendications 1 à 8, **caractérisé en ce que** le dispositif de guidage (21) est réalisé de manière à permettre au porte-pince (6) exclusivement deux degrés de liberté de mouvement perpendiculaires l'un à l'autre.

10. Appareil de manipulation selon l'une des revendications 1 à 9, **caractérisé en ce que** le guide linéaire (25), en combinaison avec une courbe de sélection de trajectoire (36) présentant un parcours en U, s'étend, dans une zone située devant les tronçons terminaux de courbe (38a, 38b), transversalement à ces tronçons terminaux de courbe (38a, 38b).

11. Appareil de manipulation selon l'une des revendications 1 à 10, **caractérisé par** des moyens de butée (56), servant à la sélection variable de la longueur de la trajectoire de manipulation (5) que doit suivre le porte-pince (6), lesquels moyens coopèrent avantageusement avec le porte-pince (6).

12. Appareil de manipulation selon l'une des revendications 1 à 11, **caractérisé par** des moyens d'amortissement de chocs (58) qui sont associés aux extrémités de la trajectoire de manipulation (5) que doit suivre le porte-pince (6), et qui coopèrent avec le porte-pince (6).

13. Appareil de manipulation selon l'une des revendications 1 à 12, **caractérisé en ce que** la courbe de sélection de trajectoire (36) fait partie intégrante de plusieurs porte-courbes (44) qui, pour influencer l'allure de la courbe de sélection de trajectoire (36), sont réglables au moins en partie les uns par rapport aux autres.

14. Appareil de manipulation selon la revendication 13, **caractérisé en ce que** les porte-courbes (44) sont disposés sur un corps de support (12) de préférence de type plaque, sur lequel est avantageusement prévu aussi le dispositif de guidage (21), éventuellement prévu, pour le porte-pince (6).

15. Appareil de manipulation selon l'une des revendications 1 à 14, **caractérisé en ce que** le dispositif d'entraînement (13) est constitué par un dispositif d'entraînement en rotation électrique ou actionné par un fluide.

16. Appareil de manipulation selon l'une des revendications 1 à 15, **caractérisé par** une pince (7) fixée de manière séparable sur le porte-pince (6).
